# EUROPÄISCHE PATENTSCHRIFT

(11) **EP 2 859 869 B1**
(45) Veröffentlichungstag und Bekanntmachung des Hinweises auf die Patenterteilung: **25.01.2017**
(21) Anmeldenummer: 14188664.8
(22) Anmeldetag: 13.10.2014
(51) Int. Cl.: A61G 3/02, B60N 2/00, B60N 2/08, B64D 11/06, B60P 7/08, B60N 2/015

(54) **Vorrichtung zur verschieblichen Verbindung eines Fahrgastsitzes mit einer Fahrzeugstruktur**
Device for producing a sliding connection between a passenger seat and a vehicle structure
Dispositif destiné à la liaison coulissante d'un siège passager à une structure de véhicule

(30) Priorität: 11.10.2013 DE 102013220545
(43) Veröffentlichungstag der Anmeldung: 15.04.2015
(73) Patentinhaber: Franz Kiel GmbH, 86720 Nördlingen (DE)
(72) Erfinder: Mill, Jürgen, 73479 Ellwangen (DE)
(74) Vertreter: Schmid, Wolfgang

(56) Entgegenhaltungen:
- EP-A1- 1 892 142
- WO-A1-2012/100152
- DE-A1- 10 034 008
- DE-A1- 19 851 392
- DE-C1- 19 824 038

## Beschreibung

Die Erfindung betrifft eine Vorrichtung zur verschieblichen Verbindung eines Fahrgastsitzes mit einer Fahrzeugstruktur, mit Einrichtungen zur Anbringung des Fahrgastsitzes und mit einer Einrichtung zum Eingreifen in eine mit der Fahrzeugstruktur verbundene Führung.

Eine gattungsgemäß Vorrichtung ist aus der DE 198 24 038 C1 bekannt. Hierbei wird ein Sperrriegel mittels einer Steuerscheibe verschoben, um in eine Rastöffnung einer Schiene eingreifen zu können und damit den Fahrzeugsitz gegenüber der Schiene zu verriegeln.

Die DE 198 51 392 A1 beschreibt eine Vorrichtung zum zeitweiligen Verbinden eines Fahrzeugsitzes mit einer eine hinterschnittene Längsnut und Bohrungen aufweisenden Halteschiene ragen Klemmstifte ab, die jeweils in die Bohrungen der Längsnut einsetzbar und mit einem Fußteller im hinterschnittenen Bereich der Halteschiene verschiebbar ausgebildet sind.

Die EP 1 892 142 A1 betrifft eine Befestigungsvorrichtung zur Befestigung eines Sitzes an einer Nut.

Aus der DE 100 34 008 A1 ist eine Einrichtung zur Verstellung und Arretierung eines in Längsrichtung verschiebbaren Sitzes bekannt.

Die WO 2012/100152 A1 bezieht sich auf eine Sitzschienenbefestigung.

Aus dem allgemeinen Stand der Technik sind weitere verschiebliche Fahrgastsitze in Bussen bekannt. Beispielsweise kann es erforderlich sein, mehrere Sitze in Längsrichtung des Fahrzeugs zu verschieben, um einen größeren freien Raum zu schaffen, in dem ein Rollstuhlfahrer untergebracht werden kann.

Die bekannten Lösungen sind jedoch meist verhältnismäßig aufwändig zu bedienen, wodurch die Schaffung des Freiraums in dem Fahrzeug sehr viel Zeit in Anspruch nimmt.

Es ist daher Aufgabe der vorliegenden Erfindung, eine Vorrichtung zur verschieblichen Verbindung eines Fahrgastsitzes mit einer Fahrzeugstruktur zu schaffen, die einfach und sicher zu bedienen ist.

Erfindungsgemäß wird diese Aufgabe durch die in Anspruch 1 genannten Merkmale gelöst.

Der Sicherungsbolzen, der zum Eingreifen in die Ausnehmung der Führung vorgesehen ist und der mittels der Anhebeeinrichtung außer Eingriff mit der Ausnehmung gebracht werden kann, sorgt einerseits für eine sichere Befestigung der erfindungsgemäßen Vorrichtung und damit auch des an derselben angebrachten Fahrgastsitzes an der Fahrzeugstruktur und kann andererseits mittels der Anhebeeinrichtung sehr einfach aus der Ausnehmung entfernt werden, wodurch die Verbindung zwischen der Vorrichtung und der Fahrzeugstruktur aufgehoben und der gesamte Fahrgastsitz verschoben werden kann.

Dabei wird erfindungsgemäß der Sicherungsbolzen in seinem Zustand, in dem er sich außerhalb der Ausnehmung befindet, gegen die Führung vorgespannt, so dass der Sicherungsbolzen bei der Verschiebung des Fahrgastsitzes entlang der mit der Fahrzeugstruktur verbundenen Führung in die nächste Ausnehmung in der Führung eingreift. Für die den Fahrgastsitz verschiebende Person hat dies den Vorteil, dass lediglich der Sicherungsbolzen mittels der Anhebevorrichtung außer Eingriff mit der Ausnehmung gebracht und anschließend der Fahrgastsitz entlang der Führung verschoben werden muss, wohingegen die erfindungsgemäße Vorrichtung bei der Verschiebung des Fahrgastsitzes entlang der Führung selbst für ein Eingreifen in die nächste Ausnehmung sorgt und auf diese Weise eine neue Verbindung zwischen dem Fahrgastsitz und der Fahrzeugstruktur an einem anderen Ort innerhalb des Fahrzeugs herstellt.

Eine einfache Steuerung der erfindungsgemäßen Vorrichtung ergibt sich dadurch, dass die Anhebeeinrichtung eine Steuerscheibe aufweist.

Ein Blockieren der gesamten Vorrichtung ergibt sich dadurch, dass die Steuerscheibe mittels eines Verriegelungselements blockierbar ist.

Dadurch, dass der Sicherungsbolzen mit der Steuerscheibe zumindest mittelbar über zu der Federeinrichtung gehörende Zugfedern und mit den Zugfedern und der Steuerscheibe verbundene Steuerhebel verbunden ist, ergibt sich eine einfache Ansteuerung der den Sicherungsbolzen auf die Führung pressenden Federeinrichtung.

Wenn in einer sehr vorteilhaften Weiterbildung der Erfindung die Führung mehrere, in bestimmten Abständen zueinander angeordnete Ausnehmungen aufweist, so kann zum Einen ein Fahrgastsitz in mehreren unterschiedlichen Position entlang der Fahrzeugstruktur angebracht werden und es ist zum Anderen möglich, mehrere Fahrgastsitze entlang der Fahrzeugstruktur zu verschieben und an unterschiedlichen Positionen zu befestigen.

Eine weitere vorteilhafte Ausgestaltung der Erfindung kann darin bestehen, dass mit der Anhebeeinrichtung Rollen verbunden sind, die bei der Anhebebewegung des Sicherungsbolzens mittels der Anhebeeinrichtung auf die Führung abgesenkt werden. Mittels dieser Rollen, die beim außer Eingriff Bringen des Sicherungsbolzens auf die Führung abgesenkt werden, ist ein einfacheres Verschieben der erfindungsgemäßen Vorrichtung entlang der Führung möglich, da die Reibung zwischen dem mit der Federeinrichtung auf die Führung gedrückten Sicherungsbolzen und der Führung erheblich verringert wird.

Um die Rollen gegenüber der Führung zu bewegen, können die Rollen über die Steuerhebel mit der Steuerscheibe verbunden sein.

In einer weiteren vorteilhaften Ausführungsform der Erfindung kann vorgesehen sein, dass die Anhebeeinrichtung eine auf den Sicherungsbolzen wirkende Betätigungsstange aufweist. Dadurch ist eine einfache und wirkungsvolle Betätigung der Vorrichtung möglich.

Um eine versehentliche Betätigung der Vorrichtung zu vermeiden, kann des Weiteren vorgesehen sein, dass die Betätigungsstange mittels eines Verriegelungselements blockierbar ist.

Wenn das Verriegelungselement mittels eines Entriegelungsgestänges in seine die Bewegung der Betätigungsstange freigebende Position bringbar ist, so ist eine einfache Freigabe der Bewegung der Betätigungsstange möglich.

Wenn des Weiteren vorgesehen ist, dass mit der Steuerscheibe auf die Führung pressbare Verriegelungsarme in Wirkverbindung stehen, so kann sich eine besonders gute Verriegelung des Fahrgastsitzes mit der Fahrzeugstruktur ergeben.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

### Es zeigt:

- Fig. 1: eine sehr schematische Ansicht eines Fahrgastsitzes, der mittels einer erfindungsgemäßen Vorrichtung verschieblich mit einer Fahrzeugstruktur verbunden ist;
- Fig. 2: eine Seitenansicht einer ersten Ausführungsform der erfindungsgemäßen Vorrichtung gemäß dem Pfeil II aus Fig. 1 in einem ersten Zustand;
- Fig. 3: eine weitere Darstellung der Vorrichtung aus Fig. 2;
- Fig. 4: die Vorrichtung aus Fig. 3 in einem weiteren Zustand;
- Fig. 5: eine perspektivische Ansicht der Vorrichtung in dem Zustand von Fig. 2;
- Fig. 6: eine weitere perspektivische Ansicht der Vorrichtung in dem Zustand von Fig. 2;
- Fig. 7: eine perspektivische Ansicht einer zweiten Ausführungsform der erfindungsgemäßen Vorrichtung;
- Fig. 8: eine Ansicht der Vorrichtung gemäß dem Pfeil VIII aus Fig. 7;
- Fig. 9: eine Seitenansicht der Vorrichtung gemäß dem Pfeil IX aus Fig. 7 in einem ersten Zustand; und
- Fig. 10: die Vorrichtung aus Fig. 9 in einem weiteren Zustand.

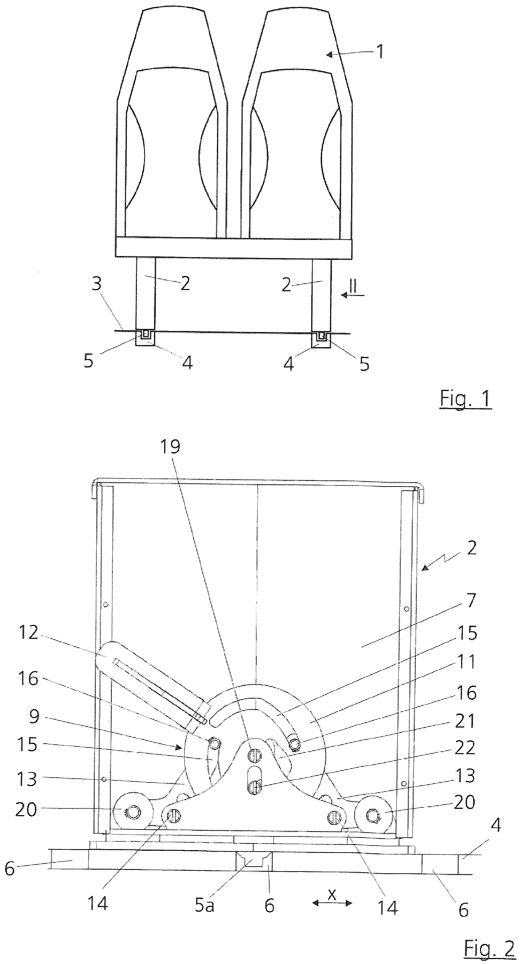

Fig. 1 zeigt einen Fahrgastsitz 1, der mittels zweier Vorrichtungen 2 verschieb lich an einer Fahrzeugstruktur 3 eines nicht dargestellten Fahrzeugs, beispielsweise eines Busses, angebracht ist. Prinzipiell wäre es zwar möglich, den Fahrgastsitz 1 mittels lediglich einer Vorrichtung 2 mit der Fahrzeugstruktur 3 zu verbinden, aus Stabüitätsgründen werden üblicherweise jedoch zwei Vorrichtungen 2 eingesetzt. Die beiden Vorrichtungen 2 sind im Wesentlichen identisch bzw. spiegelbildlich zueinander ausgeführt, weshalb die nachfolgende Beschreibung derselben für beide Vorrichtungen 2 gleichermaßen gilt.

Die Verschiebung des Fahrgastsitzes 1 gegenüber der Fahrzeugstruktur 3 dient dazu, einen Freiraum innerhalb des Fahrzeugs zu schaffen, beispielsweise um einen Rollstuhlfahrer unterbringen zu können. Wenn die nicht näher bezeichneten Sitzflächen des Fahrgastsitzes 1 nach oben klappbar sind, können hintereinander angeordnete Fahrgastsitze 1 sehr eng zusammengeschoben werden, so dass bereits durch die Verschiebung weniger Fahrgastsitze 1 ein verhältnismäßig großer Freiraum entsteht.

Die Fahrzeugstruktur 3, bei der es sich im vorliegenden Fall um einen Boden des Fahrzeugs handelt, weist zwei mit derselben verbundene Führungen 4 auf, mit denen die Vorrichtungen 2 verbunden sind. Hierzu weisen die Vorrichtungen 2 jeweilige Einrichtungen 5 zum Eingreifen in die jeweilige Führung 4 auf.

In Fig. 2 ist eine erste Ausführungsform einer der beiden Vorrichtungen 2 detaillierter dargestellt. Dabei ist erkennbar, dass die Einrichtung 5 zum Eingreifen in die Führung 4 der Fahrzeugstruktur 3 ein Sicherungselement bzw. einen Sicherungsbolzen 5a aufweist bzw. in diesem Fall als ein solcher ausgebildet ist. Zur Aufnahme des Sicherungsbolzens 5a weist die Führung 4 mehrere, in bestimmten Abständen zueinander angeordnete Ausnehmungen 6 auf, in welche der Sicherungsbolzen 5a eingreifen kann, wie dies in Fig. 2 beispielhaft dargestellt ist. Die Abstände, die die Ausnehmungen 6 voneinander aufweisen, stellen jeweils eine bestimmte, je nach Anwendungsfall auslegbare Strecke bei der Verschiebung des Fahrgastsitzes 1 entlang der Führungen 4 dar. Die Verschiebungsrichtung der Vorrichtung 2 und somit des Fahrgastsitzes 1 ist in Fig. 2 mit dem Doppelpfeil "x" angedeutet.

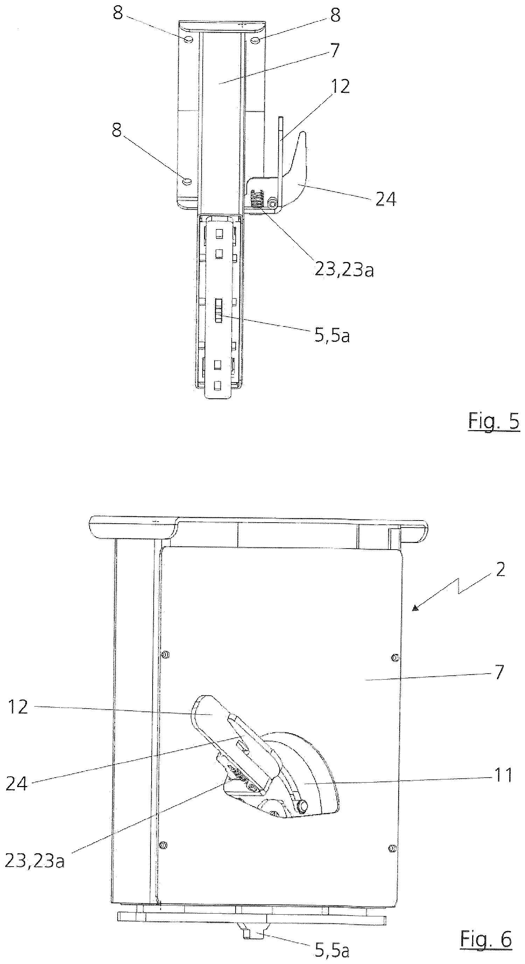

Die Vorrichtung 2 weist eine Konsole 7 auf, welche zwischen dem Fahrgastsitz 1 und der Fahrzeugstruktur 3 angeordnet ist und welche in Fig. 5 dargestellte, als Bohrungen ausgebildete Einrichtungen 8 zur Anbringung des Fahrgastsitzes 1 aufweist. Die Konsole 7 bildet einen Rahmen, in dem die einzelnen Teile der Vorrichtung 2 angeordnet bzw. gelagert sind.

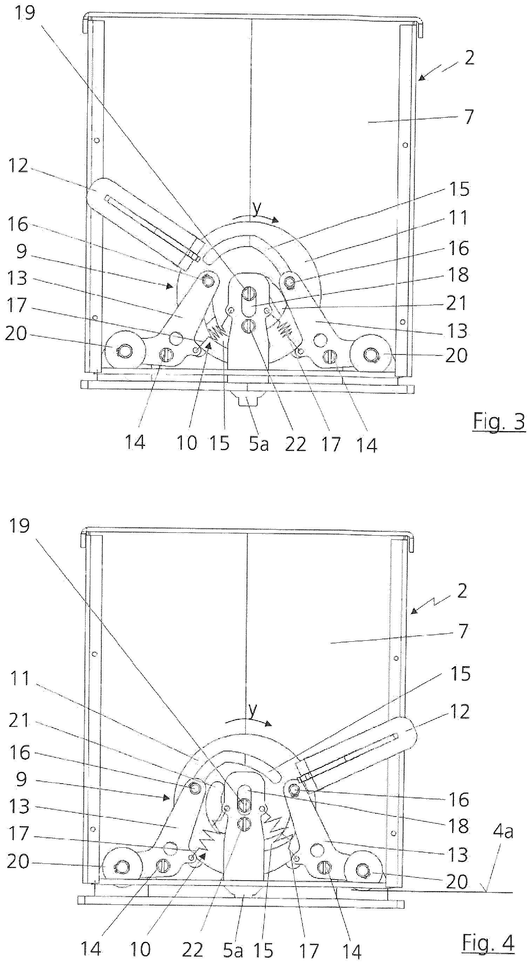

Des Weiteren weist die Vorrichtung 2 eine Anhebeeinrichtung 9 auf, mit welcher der Sicherungsbolzen 5a anhebbar und somit außer Eingriff mit der Ausnehmung 6 in der Führung 4 bringbar ist. Die Anhebeeinrichtung 9 weist wiederum eine Federeinrichtung 10 auf, die in der detaillierteren Darstellung von Fig. 3 erkennbar ist und die den Sicherungsbolzen 5a in seinem außer Eingriff mit der Ausnehmung 6 in der Führung 4 gebrachten Zustand gegen die Führung 4 vorspannt. Mit anderen Worten, in dem Zustand, in dem der Sicherungsbolzen 5a aus der Ausnehmung 6 angehoben wurde, drückt die Federeinrichtung 10 den Sicherungsbolzen 5a in Richtung der Führung 4.

In Fig. 3 ist des Weiteren zu erkennen, dass die Anhebeeinrichtung 9 eine Steuerscheibe 11 aufweist, die mittels eines ebenfalls zu der Anhebeeinrichtung 9 gehörenden Betätigungshebels 12 von dem in Fig. 3 dargestellten Zustand gemäß dem Pfeil "y" in den in Fig. 4 dargestellten Zustand verdreht werden kann. Die Anhebeeinrichtung 9 weist des Weiteren zwei voneinander beabstandete und im vorliegenden Fall symmetrisch zu dem Sicherungsbolzen 5a angeordnete Steuerhebel 13 auf, die jeweils um einen Drehpunkt 14 drehbar an der Konsole 7 angebracht sind. Des Weiteren sind die beiden Steuerhebel 13 in jeweiligen Exzenternuten 15 der Steuerscheibe 11 gelagert. Diese Lagerung erfolgt mittels eines an dem jeweiligen Steuerhebel 13 angebrachten Bolzens 16, der in die Exzenternut 15 eingreift, sodass der Steuerhebel 13 in derselben gehalten ist. Des Weiteren sind die beiden Steuerhebel 13 über zu der Federeinrichtung 10 gehörende Zugfedern 17 mit dem Sicherungsbolzen 5a verbunden. Hierzu sind die Zugfedern 17 einerseits in dem jeweiligen Steuerhebel 13 und andererseits in dem Sicherungsbolzen 5a eingehängt. Der Bolzen 16 ist also über die beiden Zugfedern 17 und die beiden Steuerhebel 13 mit der Steuerscheibe 11 verbunden. Des Weiteren weist der Sicherungsbolzen 5a ein Langloch 18 auf, in das ein Bolzen 19 eingreift, der an der Steuerscheibe 11 angeordnet ist und für eine Führung des Sicherungsbolzens 5a sorgt.

An der der Lagerung der Steuerhebel 13 mittels der Bolzen 16 in den Exzenternuten 15 gegenüberliegenden Seite sind an den Steuerhebeln 13 jeweilige Rollen 20 angebracht, die, wie nachfolgend beschrieben, bei der Anhebebewegung des Sicherungsbolzens 5a mittels der Anhebeeinrichtung 9 auf die Führung 4 abgesenkt werden.

Wie aus einem Vergleich von Fig. 3 mit Fig. 4 hervorgeht, wird bei der Bewegung des Betätigungshebels 12 gemäß dem Pfeil "y" die Steuerscheibe 11 entsprechend verdreht. Dadurch werden die Steuerhebel 13 aufgrund ihrer Lagerung in den sich mit der Bewegung der Steuerscheibe 11 drehenden Exzenternuten 15 bewegt und drehen sich um den Drehpunkt 14. Dies sorgt dafür, dass die Rollen 20 nach unten auf die Führung 4 bewegt werden. Da die Führung 4, wie oben erläutert, als im Querschnitt U-förmige Schiene ausgebildet ist, werden die Rollen 20 auf einen nur in Fig. 4 angedeuteten oberen Abschnitt 4a der U-förmigen Schiene abgesenkt, wodurch der wesentliche Anteil der durch den Fahrgastsitz 1 über die Vorrichtung 2 auf die Führung 4 wirkenden Kraft bei der Verschiebung des Fahrgastsitzes 1 von den Rollen 20 aufgebracht wird. Der Sicherungsbolzen 5a wird dagegen lediglich durch die Kraft der beiden Zugfedern 17 auf die Führung 4 gedrückt. Auf diese Weise werden Beschädigungen der Führung 4 vermieden. Selbstverständlich kann in diesem Zusammenhang der Sicherungsbolzen 5a an seiner der Führung 4 zugewandten Seite mit einer Beschichtung oder dergleichen versehen sein, die dafür sorgt, dass der Sicherungsbolzen 5a dieselbe nicht beschädigt.

Gleichzeitig wird bei der Bewegung der Steuerscheibe 11 gemäß dem Pfeil "y" mittels des Betätigungshebels 12 der Sicherungsbolzen 5a von seiner in Fig. 3 dargestellten Position in die in Fig. 4 dargestellte Position angehoben. Hierzu weist die Sicherungsscheibe 11 zusätzlich zu den beiden Exzenternuten 15 eine weitere Steuer- bzw. Exzenternut 21 auf, in die ein weiterer Bolzen 22 eingreift, der fest mit dem Sicherungsbolzen 5a verbunden ist. Durch die Drehung der Steuerscheibe 11 wird der in die Exzenternut 21 eingreifende Bolzen 22 zwangsgeführt und schiebt damit den Sicherungsbolzen 5a nach oben.

Bei dieser Bewegung des Sicherungsbolzens 5a nach oben werden die beiden Zugfedern 17 gespannt, wodurch sie dafür sorgen, dass der Sicherungsbolzen 5a, wie bereits oben erwähnt, auf die Führung 4 vorgespannt bzw. gedrückt wird. In diesem Zustand kann der Fahrgastsitz 1 mit den beiden Vorrichtungen 2 entlang der Führung 4 gegenüber der Fahrzeugstruktur 3 verschoben werden. Der Sicherungsbolzen 5a rastet dann in der nächsten Ausnehmung 6 ein und der Fahrgastsitz 1 ist in einer von seiner ursprünglichen Position entfernten Position verriegelt.

Nachdem der Sicherungsbolzen 5a außer Eingriff mit der Ausnehmung 6 gebracht und der Fahrgastsitz 1 geringfügig gegenüber der Fahrzeugstruktur 3 verschoben wurde, kann der Bestätigungshebel 12 losgelassen werden, um zu ermöglichen, dass der Sicherungsbolzen 5a durch die Kraft der Federeinrichtung 10 in die nächste Ausnehmung 6 gedrückt wird. Beim Einfahren des Sicherungsbolzens 5a in die Ausnehmung 6 werden die Zugfedern 17 entspannt und die Rollen 20 kehren aufgrund der Drehung der Steuerhebel 13 in ihre Stellung von Fig. 3 zurück.

In Fig. 5 ist erkennbar, dass der Betätigungshebel 12 eine Sicherungseinrichtung 23 aufweist, die wiederum eine Feder 23a aufweist und die mittels einer in Form eines Hebels ausgebildeten Freigabeeinrichtung 24 in eine Position gebracht werden kann, in der der Betätigungshebel 12 zur Verdrehung der Steuerscheibe 11 eingesetzt werden kann. Mit anderen Worten, vor der Betätigung des Betätigungshebels 12 muss dieser mittels der Freigabeeinrichtung 24 freigegeben ist.

In Fig. 6 ist die Vorrichtung 2 in einer weiteren perspektivischen Ansicht dargestellt und es sind insbesondere die Sicherungseinrichtung 23 und die Freigabeeinrichtung 24 des Betätigungshebels 12 erkennbar.

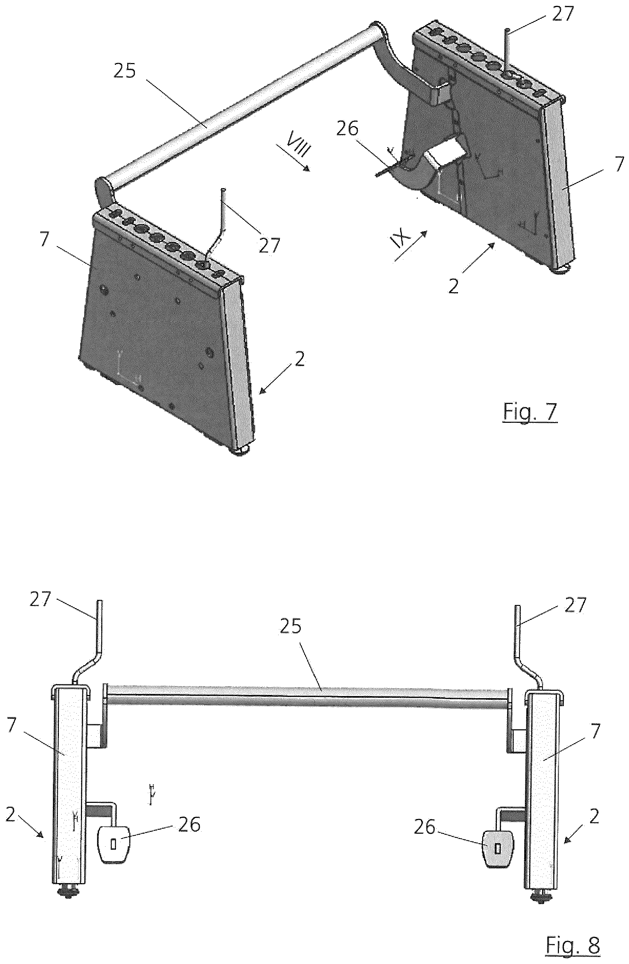

Die Figuren 7 bis 10 zeigen eine zweite Ausführungsform der Vorrichtung 2 zur verschieblichen Verbindung des Fahrgastsitzes 1 mit der Fahrzeugstruktur 3. Die Vorrichtung 2 gemäß der Figuren 7 bis 10 weist einen grundsätzlich ähnlichen Aufbau wie die unter Bezugnahme auf die Figuren 2 bis 6 beschriebene Vorrichtung 2 auf, weshalb teilweise auf eine Beschreibung bereits zuvor erläuterter Details derselben verzichtet wird.

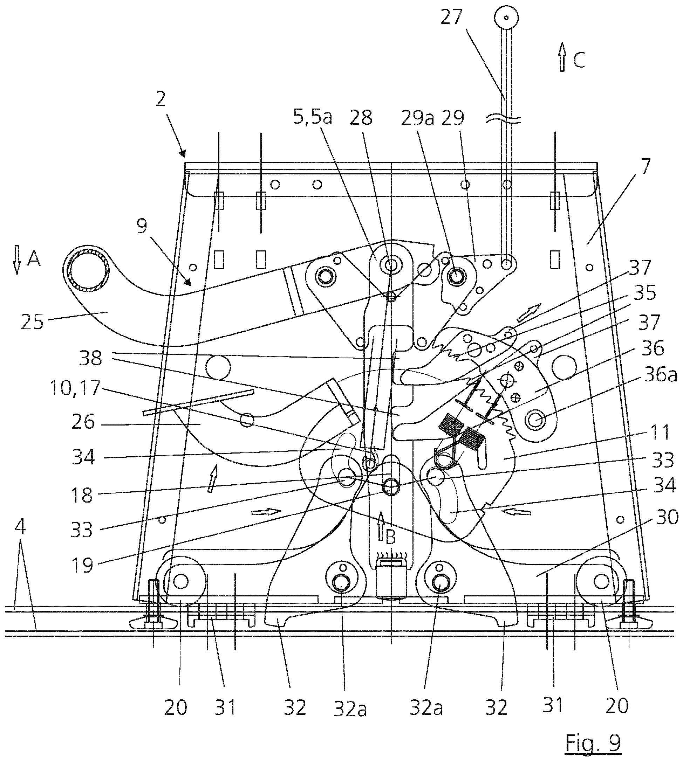

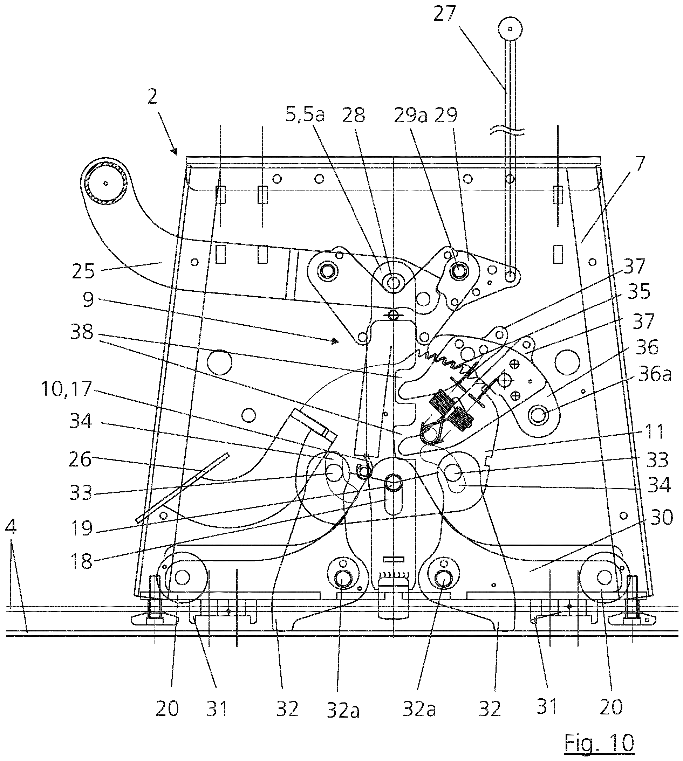

Die Anhebeeinrichtung 9 weist in diesem Ausführungsbeispiel eine den Betätigungshebel 12 gemäß der Figuren 2 bis 6 ersetzende Betätigungsstange 25 auf, weiche die beiden um die Breite des im vorliegenden Fall als Doppelsitz ausgebildeten Fahrgastsitzes 1 voneinander beabstandeten Vorrichtungen 2 miteinander verbindet. Dadurch wird eine simultane Betätigung der beiden Vorrichtungen 2 des Fahrgastsitzes 1 erreicht. Des Weiteren ist jeder der beiden Vorrichtungen 2 ein Verriegelungspedal 26 zugeordnet, dessen Funktion zu einem späteren Zeitpunkt näher erläutert wird. Außerdem ist für jede der beiden Vorrichtungen 2 ein Entriegelungsgestänge 27 vorgesehen, das zur Entriegelung der Betätigungsstange 26 dient und dessen Funktion ebenfalls zu einem späteren Zeitpunkt unter Bezugnahme auf die Figuren 9 und 10 ausführlicher beschrieben wird.

In der Vorderansicht von Fig. 8 sind die beiden Vorrichtungen 2, die zwischen denselben angeordnete Betätigungsstange 25, die beiden Verriegelungspedale 26 sowie die beiden Entriegelungsgestänge 27 ebenfalls deutlich zu erkennen.

Die Figuren 9 und 10 zeigen die Vorrichtung 2 in einer Seitenansicht in zwei unterschiedlichen Zuständen bzw. Positionen. Hierbei ist in Fig. 9 der entriegelte bzw. gelöste und in Fig. 10 der verriegelte bzw. befestigte Zustand der Vorrichtung 2 dargestellt.

Dabei ist zu erkennen, dass der Sicherungsbolzen 5a an einem Drehpunkt 28 mit der Betätigungsstange 25 verbunden ist. Dadurch wird bei der Betätigung der Betätigungsstange 25 in der mit "A" bezeichneten Richtung der Sicherungsbolzen 5a in der mit "B" bezeichneten Richtung nach oben gezogen und somit in seine entriegelte Position gebracht. Analog zu der Ausführungsform der Figuren 2 bis 6 ist der Sicherungsbolzen 5a auch in diesem Fall über den Bolzen 19 in dem Langloch 18 gelagert, um diese Bewegung des Sicherungsbolzens 5a in der Richtung des Pfeils "B" zu führen.

Um die beschriebene Betätigung der Betätigungsstange 25 in Pfeilrichtung "A" zu ermöglichen, wird zunächst über das Entriegelungsgestänge 27 ein die Betätigungsstange 25 in ihrer oberen Position gemäß Fig. 10 haltendes Verriegelungselement 29 von der Position gemäß Fig. 10 in die Position gemäß Fig. 9 gebracht. Hierzu wird das Entriegelungsgestänge 27 in der mit "C" bezeichneten Pfeilrichtung nach oben bewegt, was beispielsweise durch eine Kopplung des Entriegelungsgestänges 27 mit einer nicht dargestellten Sitzfläche bzw. einem Sitzpolster des Fahrgastsitzes 1 erfolgen kann. Dadurch wird das Verriegelungselement 29 in die entriegelnde Position von Fig. 9 gebracht und die Betätigungsstange 25 kann nur dann entriegelt werden, wenn sich die Sitzfläche in einem hochgeklappten Zustand befindet. Das Sitzpolster bzw. die Sitzfläche kann so angeordnet sein, dass sie das Verriegelungselement 29 in der verriegelnden Position hält. Beim Verschwenken des Sitzpolsters kann dann eine Entriegelung des Verriegelungselements 29 über das mit dem Sitzpolster verbundene Entriegelungsgestänge 27 vorgesehen sein. Das Verriegelungselement 29 ist dabei über einen Drehpunkt 29a drehbar an der Konsole 7 angebracht.

Das Verriegelungselement 29 ist so ausgeführt, dass es bei der Aufwärtsbewegung der Betätigungsstange 25 dieselbe selbsttätig in der oberen Position verriegelt. Dadurch ist eine Betätigung der Betätigungsstange 25 erst durch eine Entriegelung des Verriegelungselements 29 über das Entriegelungsgestänge 27 möglich.

In dem entriegelten Zustand des Sicherungsbolzens 5a kann die Konsole 7, wie in dem Ausführungsbeispiel gemäß der Figuren 2 bis 6 beschrieben, über die Rollen 20 auf der Führung 4 bewegt werden. Wie bei der Ausführungsform der Figuren 2 bis 6 ist auch hier die Federeinrichtung 10 vorgesehen, welche den Sicherungsbolzen 5a entgegen dem Pfeil "B" in Richtung der Führung 4 drückt, so dass der Sicherungsbolzen 5a beim Erreichen der nächsten Ausnehmung 6 innerhalb der Führung 4 in dieselbe einrastet.

Die beiden Rollen 20 sind an einem gemeinsamen, sich auf beiden Seiten des Sicherungsbolzens 5a erstreckenden Führungselement 30 gelagert, das beim Anheben des Sicherungsbolzens 5a in Richtung der Führung 4 bewegt wird, sodass die Rollen 20 auf der Führung 4 aufliegen und ein Bewegen der Rollen 20 auf der Führung 4 möglich ist. Des Weiteren sind mit dem Führungselement 30 im vorliegenden Fall zwei Nutensteine 31 verbunden, die sich bei der gelösten Position von Fig. 9 in einem Abstand von der Führung 4 befinden und damit die Bewegung der Konsole 7 entlang der Führung 4 ermöglichen. Demgegenüber befinden sich die Nutensteine 31 bei der Position von Fig. 10 in Kontakt mit der Unterseite der Führung 4 und verriegeln dadurch, gemeinsam mit jeweilige Verriegelungsarmen 32, die Konsole 7 mit der Führung 4.

Im vorliegenden Fall ist bei der Verspannung der Konsole 7 über die Nutensteine 31 und die Verriegelungsarme 32 ein gewisser Abstand der Konsole 7 von der Führung 4 gegeben. Des Weiteren weisen die Rollen 20 in der verriegelten Position einen Abstand von der Führung 4 auf. Dagegen bewegt sich die Konsole 7 bei der Bewegung von der verriegelten Position gemäß Fig. 10 in die entriegelte Position gemäß Fig. 9 nach unten.

Die Verriegelungsarme 32 wirken entgegen der Richtung der Nutensteine 31, so dass eine Verspannung der Konsole 7 an der Führung 4 erreicht wird. Zur Bewegung der Verriegelungsarme 32 sind dieselben an jeweiligen Drehpunkten 32a drehbar gelagert. Des Weiteren sind die Verriegelungsarme 32 über Bolzen 33 in jeweiligen Exzenternuten 34 beweglich gelagert, die sich in der auch in dem Ausführungsbeispiel der Figuren 7 bis 10 vorhandenen Steuerscheibe 11 befinden. Wie aus einem Vergleich der Figuren 9 und 10 deutlich wird, führt ein Verdrehen der Steuerscheibe 11 dazu, dass die Bolzen 33 aufgrund ihrer Führung in den Exzenternuten 34 verdreht werden und damit letztendlich die Verriegelungsarme 32 auf die Führung 4 drücken.

Um diese Verdrehung der Steuerscheibe 11 und die Verriegelung der Konsole 7 gegenüber der Führung 4 zu erreichen, wird das Verriegelungspedal 26 von der Position gemäß Fig. 9 in die Position gemäß Fig. 10 gebracht. Diese Betätigung des jeweiligen Verriegelungspedals 26 hat des Weiteren zur Folge, dass ein über eine jeweilige Verzahnung 35 mit der Steuerscheibe 11 in Eingriff stehendes Verriegelungselement 36 von der in Fig. 9 dargestellten Position in die in Fig. 10 dargestellte Position gelangt, in der die beiden Verzahnungen 35 an der Steuerscheibe 11 und dem Verriegelungselement 36 miteinander in Eingriff sind, um eine Bewegung der Steuerscheibe 11 zu blockieren. Um die Verdrehung des Verriegelungselements 36 zu ermöglichen, ist dasselbe an einem Drehpunkt 36a gelagert.

Für die Entriegelung des Verriegelungselements 36 sorgen zwei mit demselben gekoppelte Entriegelungselemente 37, die einerseits an dem Verriegelungselement 36 angreifen und andererseits in jeweilige Aussparungen 38 des Sicherungsbolzens 5a eingreifen, so dass sie bei der Aufwärtsbewegung des Sicherungsbolzens 5a gemäß dem Pfeil "B" nach oben gedrückt werden, um das Verriegelungselement 36 in die Position von Fig. 9 zu bringen. Bei dieser Bewegung wird außerdem die auch bei dieser Ausführungsform vorhandene Zugfeder 17 der Federeinrichtung 10 gespannt. Durch das Spannen der Federeinrichtung 10 wird, wie bereits erwähnt, ähnlich wie bei der Ausführungsform der Figuren 2 bis 6, die Vorspannung des Sicherungsbolzens 5a in Richtung der Führung 4 bewerkstelligt.

Des Weiteren wird auf diese Weise das Verriegelungspedal 26 durch eine Betätigung der Betätigungsstange 25 von seiner unteren, die Konsole 7 gegenüber der Führung 4 verriegelnden Position in seine obere, in Fig. 9 dargestellte und die Bewegung der Konsole 7 gegenüber der Führung 4 und damit die Bewegung des Fahrgastsitzes 1 ermöglichende Position gebracht.

## Patentansprüche

1. Vorrichtung (2) zur verschieblichen Verbindung eines Fahrgastsitzes (1) mit einer Fahrzeugstruktur (3), mit Einrichtungen (8) zur Anbringung des Fahrgastsitzes (1) und mit einer Einrichtung (5) zum Eingreifen in eine mit der Fahrzeugstruktur (3) verbundene Führung (4), wobei
die Einrichtung (5) zum Eingreifen in die Führung (4) einen Sicherungsbolzen (5a) aufweist, der mittels einer Anhebeeinrichtung (9) außer Eingriff mit einer Ausnehmung (6) in der Führung (4) bringbar ist, wobei die Anhebeeinrichtung (9) eine Federeinrichtung (10) aufweist, die den Sicherungsbolzen (5a) in seinem außer Eingriff mit der Ausnehmung (6) in der Führung (4) gebrachten Zustand gegen die Führung (4) vorspannt, und wobei die Anhebeeinrichtung (9) eine Steuerscheibe (11) aufweist,
**dadurch gekennzeichnet, dass** die Steuerscheibe (11) mittels eines Verriegelungselements (36) blockierbar ist, und dass der Sicherungsbolzen (5a) mit der Steuerscheibe (11) zumindest mittelbar über zu der Federeinrichtung (10) gehörende Zugfedern (17) und mit den Zugfedern (17) und der Steuerscheibe (11) verbundene Steuerhebel (13) verbunden ist.

2. Vorrichtung nach Anspruch 1,
**dadurch gekennzeichnet, dass** die Führung (4) mehrere, in bestimmten Abständen zueinander angeordnete Ausnehmungen (6) aufweist.

3. Vorrichtung nach Anspruch 1 oder 2,
**dadurch gekennzeichnet, dass** mit der Anhebeeinrichtung (9) Rollen (20) verbunden sind, die bei der Anhebebewegung des Sicherungsbolzens (5a) mittels der Anhebeeinrichtung (9) auf die Führung (4) abgesenkt werden.

4. Vorrichtung nach Anspruch 3,
**dadurch gekennzeichnet, dass**
die Rollen (20) über die Steuerhebel (13) mit der Steuerscheibe (11) verbunden sind.

5. Vorrichtung nach Anspruch 4,
**dadurch gekennzeichnet, dass**
die Steuerscheibe (11) jeweilige Exzenternuten (15) aufweist, in welchen die Steuerhebel (13) an ihren den Rollen (20) gegenüberliegenden Enden gelagert sind.

6. Vorrichtung nach einem der Ansprüche 1 bis 5,
**dadurch gekennzeichnet, dass**
die Steuerscheibe (11) mittels eines Betätigungshebels (12) drehbar ist.

7. Vorrichtung nach Anspruch 6,
**dadurch gekennzeichnet, dass**
der Betätigungshebel (12) eine Sicherungseinrichtung (23) aufweist, welche mittels einer Freigabeeinrichtung (24) in eine die Bewegung der Steuerscheibe (11) mittels des Betätigungshebels (12) freigebende Stellung bringbar ist.

8. Vorrichtung nach einem der Ansprüche 1 bis 7,
**dadurch gekennzeichnet, dass**
die Anhebeeinrichtung (9) eine auf den Sicherungsbolzen (5a) wirkende Betätigungsstange (25) aufweist.

9. Vorrichtung nach Anspruch 8,
**dadurch gekennzeichnet, dass**
die Betätigungsstange (25) mittels eines Verriegelungselements (29) blockierbar ist.

10. Vorrichtung nach Anspruch 9,
**dadurch gekennzeichnet, dass**
das Verriegelungselement (29) mittels eines Entriegelungsgestänges (27) in seine die Bewegung der Betätigungsstange (25) freigebende Position bringbar ist.

11. Vorrichtung nach einem der Ansprüche 1 bis 10,
**dadurch gekennzeichnet, dass**
mit der Steuerscheibe (11) auf die Führung (4) pressbare Verriegelungsarme (32) in Wirkverbindung stehen.

12. Vorrichtung nach einem der Ansprüche 1 bis 11,
**dadurch gekennzeichnet, dass**
die Führung (4) als im Querschnitt U-förmige Schiene ausgebildet ist.

## Claims

1. Device (2) for displaceably connecting a passenger seat (1) to a vehicle structure (3), having devices (8) for fitting the passenger seat (1) and having a device (5) for engaging in a guide (4) which is connected to the vehicle structure (3), wherein
the device (5) for engaging in the guide (4) has a securing pin (5a) which can be moved out of engagement with a recess (6) in the guide (4) by means of a lifting device (9), wherein the lifting device (9) has a resilient device (10) which pretensions the securing pin (5a) against the guide (4) in the state thereof moved out of engagement with the recess (6) in the guide (4), and wherein the lifting device (9) has a control plate (11),
**characterized in that**
the control plate (11) can be blocked by means of a locking element (36), and **in that** the securing pin (5a) is at least indirectly connected to the control plate (11) by means of tension springs (17) which belong to the resilient device (10) and control levers (13) which are connected to the tension springs (17) and the control plate (11).

2. Device according to Claim 1,
**characterized in that**
the guide (4) has a plurality of recesses (6) which are arranged with specific spacings from each other.

3. Device according to Claim 1 or Claim 2,
**characterized in that**
there are connected to the lifting device (9) rollers (20) which, during the lifting movement of the securing pin (5a) by means of the lifting device (9), are lowered onto the guide (4).

4. Device according to Claim 3,
**characterized in that**
the rollers (20) are connected to the control plate (11) by means of the control levers (13).

5. Device according to Claim 4,
**characterized in that**
the control plate (11) has respective eccentric grooves (15) in which the control levers (13) are supported at the ends thereof opposite the rollers (20).

6. Device according to any one of Claims 1 to 5,
**characterized in that**
the control plate (11) can be rotated by means of an actuation lever (12).

7. Device according to Claim 6,
**characterized in that**
the actuation lever (12) has a securing device (23) which can be moved by means of a release device (24) into a position which releases the movement of the control plate (11) by means of the actuation lever (12).

8. Device according to any one of Claims 1 to 7,
**characterized in that**
the lifting device (9) has an actuation rod (25) which acts on the securing pin (5a).

9. Device according to Claim 8,
**characterized in that**
the actuation rod (25) can be blocked by means of a locking element (29).

10. Device according to Claim 9,
**characterized in that**
the locking element (29) can be moved by means of an unlocking rod assembly (27) into the position thereof which releases the movement of the actuation rod (25).

11. Device according to any one of Claims 1 to 10,
**characterized in that**
locking arms (32) which can be pressed onto the guide (4) are operationally connected to the control plate (11).

12. Device according to any one of Claims 1 to 11,
**characterized in that**
the guide (4) is constructed as a rail which is U-shaped in cross-section.

## Revendications

1. Dispositif (2) pour assurer une liaison entre un siège de passager (1) avec une structure de véhicule (3), avec une installation (8) pour monter les sièges de conducteur (1) et avec une installation (5) pour s'enclencher dans un guidage (4) lié à la structure de véhicule (3), dans lequel
l'installation (5) pour s'enclencher dans un guidage (4) comporte un boulon de sécurité (5a), agencé pour être engagé dans le guidage (4) au moyen d'une installation de levée (9) hors du contact avec un évidement (6), dans lequel l'installation de levée (9) comporte une installation à ressort (10) qui a pour effet d'exercer une précontrainte du boulon de sécurité (5a) hors du contact avec l'évidement (6) contre le guidage (4), et dans lequel l'installation de levée (9) comprend une plaque de guidage (11),
**caractérisé en ce que**,
la plaque de guidage (11) peut être bloquée au moyen d'un élément de verrouillage (36) et **en ce que** le boulon de sécurité (5a) est lié au moins indirectement à la plaque de guidage (11) par l'intermédiaire du ressort de traction (17) appartenant à l'installation à ressort (10) et lié au levier de guidage (13), couplé au ressort de traction (17) et à la plaque de guidage (11).

2. Dispositif selon la revendication 1,
**caractérisé en ce que**,
le guidage (4) présente plusieurs évidements (6), disposés à des intervalles définis entre eux.

3. Dispositif selon la revendication 1 ou 2,
**caractérisé en ce que**,
l'installation de levée (9), est liée à des galets (20) qui, lors du mouvement de levée du boulon de sécurité (5a) sont abaissés au moyen de l'installation de levée (9) sur le guidage (4).

4. Dispositif selon la revendication 3,
**caractérisé en ce que**,
les galets (20) sont liés à la plaque de guidage (11) par l'intermédiaire des leviers de commande (13).

5. Dispositif selon la revendication 4,
**caractérisé en ce que**,
la plaque de guidage (11) comporte respectivement des nervures excentriques (15) dans lesquelles les leviers de commande (13) sont disposés à leurs extrémités opposées aux galets (20).

6. Dispositif selon l'une des revendications 1 à 5,
**caractérisé en ce que**,
la plaque de guidage (11) est rotative au moyen d'un levier d'actionnement (12).

7. Dispositif selon la revendication 6,
**caractérisé en ce que**,
le levier d'actionnement (12) comporte une installation de sécurité (23), laquelle peut être amenée à une position de déblocage au moyen d'un dispositif de libération (24) lors du mouvement de la plaque de guidage (11) par le levier d'actionnement (12).

8. Dispositif selon l'une des revendications 1 à 7,
**caractérisé en ce que**,
l'installation de levée (9) comporte une tige d'actionnement (25) qui agit sur le boulon de sécurité (5a).

9. Dispositif selon la revendication 8,
**caractérisé en ce que**,
la tige d'actionnement (25) peut être bloquée via un élément de verrouillage (29).

10. Dispositif selon la revendication 9,
**caractérisé en ce que**,
l'élément de verrouillage (29) peut être ramené dans sa position qui libère le mouvement de la tige d'actionnement (25) au moyen d'une tringlerie de déverrouillage (27).

11. Dispositif selon l'une des revendications 1 à 10,
**caractérisé en ce que**,
des bras de déverrouillage (32) sont en contact avec la plaque de guidage (11) pour presser sur le guidage (4).

12. Dispositif selon l'une des revendications 1 à 11,
**caractérisé en ce que**,
le guidage (4) a un profil en forme de U en section transversale.
